# EUROPEAN PATENT APPLICATION

(11) **EP 4 152 275 A1**
(43) Date of publication of application: **22.03.2023**
(21) Application number: 21020525.8
(22) Date of filing: 25.10.2021
(51) Int. Cl.: G06V 20/58, G06V 10/764, G06V 10/82, G08G 1/16, G08G 1/015, B62J 27/00, B62J 50/21

(54) **VEHICLE COLLISION DETECTION AND DRIVER NOTIFICATION SYSTEM**

(30) Priority: 21.09.2021 US 202117448269
(71) Applicant: Reby Inc., Walnut, CA 91789 (US)
(72) Inventor: Alarcón Cot, Eduard, 08174 Barcelona (ES); Ferrer Rizo, Álvaro, 28003 Madrid (ES); Llagostera Saltor, Eugeni, 08034 Barcelona (ES); CASTILLO CERDÀ, Cristina, 35.08193 Cerdanyole del Vallès (Turó de Sant Pau. Bellaterra (ES)
(74) Representative: Ivanov, Ivan Nikolov

(57) **Abstract**

A vehicle collision avoidance and driver notification system includes an object detection unit configured to detect environmental obstacles and a collision detection unit for assessing risk of collision. Depending on risk assessment, a collision avoidance unit gives feedback to the driver or directly interacts with the vehicle engine.

## Description

### Technical Field

The invention pertains to a collision detection and driver notification system for lightweight vehicles.

### Background

The driver of a lightweight vehicle faces unique risks from environmental hazards. Traditional automobiles are relatively heavy and provide substantial protection to drivers and passengers. A lightweight vehicle, however, is typically designed for a single passenger without the structural protections offered by automobiles. Examples of lightweight vehicles include electric scooters, kick scooters, electric bicycles, motorbikes, mopeds, and any other wheeled vehicle or Light Electric Vehicle (LEV) designed for urban environments and requiring minimal resources compared to heavyweight motor vehicles such as cars, trucks, and buses.

Drivers of lightweight vehicles cannot perceive everything going on around them while driving. Particularly at night or in harsh weather, distractions and driver inattention present safety risks. A collision detection and notification system that protects drivers from such risks is needed. This is particularly true for lightweight vehicles operating in urban environments. Due to the high degree of distractions, it is increasingly necessary to detect dangerous situations and warn the driver of imminent threats.

Traditional driver-assistance systems rely on heavy-weight artificial neural networks and computers with high power and memory requirements to process captured data. Such systems are viewed as necessary to automatically control the car or notify the user by means of a dashboard or similar user interface. But these technologies are poorly suited for lightweight vehicles.

### Summary

In the present invention, vehicle collision-detection and driver-notification is achieved by software and hardware optimized for lightweight vehicles. A deep learning model detects and tracks environmental objects using light-weight components. These components are optimized to provide the greatest possible safety within the constraints of a lightweight vehicle platform.

In an embodiment, a collision avoidance device for a lightweight vehicle includes an object detection unit for detecting an obstacle, a collision avoidance unit, a warning notification unit, and a feedback speed engine actuation unit. The object detection unit detects an obstacle following a dangerous trajectory. The dangerousness of the trajectory is calculated with respect to the object detection unit and the distance to the obstacle in the form of a quantitated index estimating the likelihood of collision. If the calculated value meets a predefined threshold, the warning notification unit notifies the rider of the dangerous situation.

In another embodiment, the collision avoidance unit determines whether or not the obstacle detected is expected to cause a collision. This determination depends on whether the obstacle is following a trajectory that could lead to collision with the unit and if the obstacle is within a predefined range of the unit.

In another embodiment, the warning notification unit warns the rider either by a visual indicator or by a distinctive sound. In yet another embodiment, the object detection unit includes a stereo imaging pickup device and a radar.

In a further embodiment, the object detection unit is built with light-weight algorithms that require low computational resources and power. In this and other embodiments, object detection is performed with visual means, using light-weight deep artificial neural networks structures, and by radar, using hardware with minimal power requirements.

In an embodiment, the collision avoidance unit comprises low computational cost elements. The collision avoidance unit may also be responsible for the synchronization of object detection unit data and use a Kalman filter algorithm to track and identify the detected objects. When the collision avoidance unit determines that the obstacle detected is following a dangerous trajectory and the distance to the obstacle is lower than a predefined threshold, the warning notification unit notifies the rider of the dangerous situation. The collision avoidance unit may further incorporate driver-specific metrics well as personalized analytics in the trajectory estimate. For example, the driver's weight and latency reaction time can be used as factors for trajectory estimation.

In an alternative embodiment, the invention includes a collision avoidance device that controls and adjusts engine speed as a function of the likelihood-of-collision index.

### Summary of Figures

Figure 1 shows an embodiment of the invention in a representative environment.
Figure 2 shows an embodiment of the invention in a representative environment from an alternative angle.
Figure 3 shows an embodiment of a vehicle collision detection system.
Figure 4 shows an embodiment of a method for vehicle collision detection with driver notification and protective action.
Figure 5 shows object detection used in connection with an embodiment of the invention.
Figure 6 shows an alternative object detection used in connection with an embodiment of the invention.
Figure 7 shows visualizations of data collected by a radar sensor used in connection with an embodiment of the invention.
Figure 8 shows an exemplary dashboard visible to the driver of a lightweight vehicle equipped with the vehicle collision detection and avoidance system.
Figure 9 shows an overview of the vehicle collision detection and avoidance system, including major system components.

### Detailed description

The invention is implemented in the context of a lightweight vehicle operated by a driver. Environment detection devices, including a stereo camera and a radar, transmit information from the environment to a device that processes this data and assesses risk to the driver. An object detection unit processes camera and radar data and uses this data to assess risks in the environment and give feedback to the driver.

Visual data is collected using a camera. Collected data is processed using a light-weight deep learning object detection system. Examples of currently available solutions that could be incorporated into such a system include Tiny-YOLO (You Only Look Once), MobileNet SSDlite (Single Shot MultiBox Detection), or TensorFlow-Lite. First the model is trained with a light-weight structure. In an embodiment, a TensorFlow open-source machine learning library is used. The model is further optimized to a new format, such as OpenVINO Intermediate Representation format capable of doing the inference task. In an embodiment, this task is achieved with a vision processing unit (VPU) integrated on the vision hardware at 25-30 frames per second (fps). A currently available example of such a VPU is the Intel Myriad X.

In an embodiment, vision hardware with a 12 megapixel (MP) Integrated 4K color camera is used. Alternatively, a 1 MP stereo synchronized camera with integrated global shutter is used. Such a camera provides stereo depth without burdening the host with computational requirements.

Object detection data points are also collected from a low power radar sensor. The detection algorithm contains clustering of points in order to reduce noise and improve obstacle distance accuracy from the sensor. In an embodiment, the latency between call and response is close to 200 milliseconds. For example, a Texas Instruments AWR1843 Radar Sensor is used to provide Short-and Medium-Range Radar with about a 150 meter maximum range.

The collision avoidance unit is responsible for the synchronization of both data acquisition and the use of different algorithms for merging and synchronizing vision and radar data. The unit also tracks and identifies detected objects and decides when to issue warnings. In an embodiment, a Kalman filter is used for tracking and identifying moving objects.

In an embodiment, detections are merged by comparing the tracked object's position with the camera and the radar. In a particular frame, a radar detected object and a vision detected object are defined. These definitions allow a more accurate distance calculation for the detected and classified object, including a more accurate radar distance.

To define a warning situation, the collision avoidance unit determines whether a detected object is following a dangerous trajectory with respect to the unit. If the distance to the obstacle is lower than a predefined threshold, the warning notification unit notifies the driver of the dangerous situation. In an embodiment, the collision avoidance unit contains a lightweight computer with a 1.5 GHz 64-bit quad core processor with 8GB RAM. Power requirements are approximately 5V-3A. The warnings are displayed on an integrated display in the vehicle, by means of a distinctive sound to attract the driver's attention, or by a combination of methods. For example, a high-pitched sound could be used to attract the driver's attention. Two-way danger notification, visible and audible, is therefore provided for greater driver safety.

Object detection software is tuned to detect objects that drivers of lightweight vehicles are likely to encounter, such as pedestrians, pets, cars, trucks, buses, bicycles, motorbikes, traffic lights, street signs, and other objects likely to be encountered while in urban traffic.

The visual and audible warning system is equipped with lightweight hardware and software capable of executing correctly while deployed on a lightweight vehicle in an urban traffic environment.

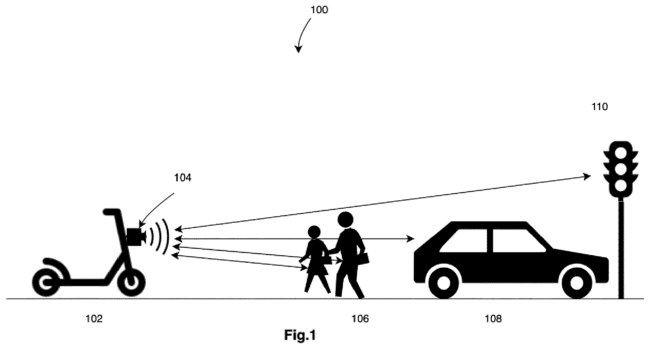

Figure 1 shows environment 100 with lightweight vehicle 102 equipped with collision avoidance device 104. Collision avoidance device 104 is presented with obstacles such as pedestrians 106, car 108, and traffic light 110. The collision avoidance device detects both the distance of each obstacle and is able to recognize the objects by category.

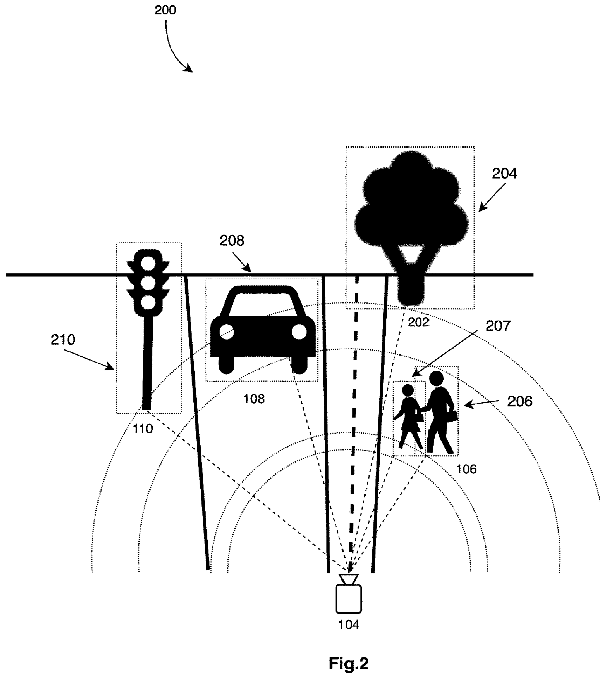

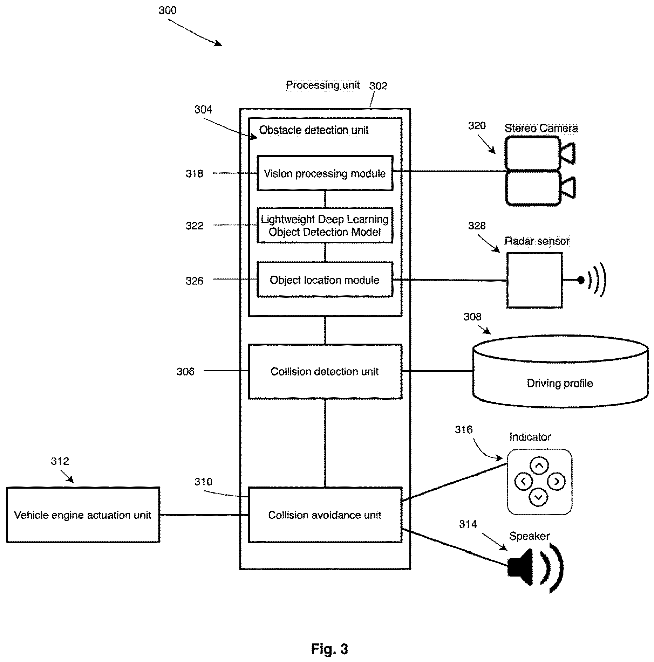

Figure 2 shows an alternative view 200 of environment 100. Collision avoidance device 104 is presented with obstacles including pedestrians 106, car 108, traffic light 110, and tree 202. Each object detected by device 104 is outlined by a bounding box. Thus, pedestrians 106 are individually bound by boxes 206 and 207, car 108 is bound by box 208, and traffic light 110 is bound by box 210. Bounding boxes result from the lightweight deep learning object detection model as shown in greater detail in Figure 3.

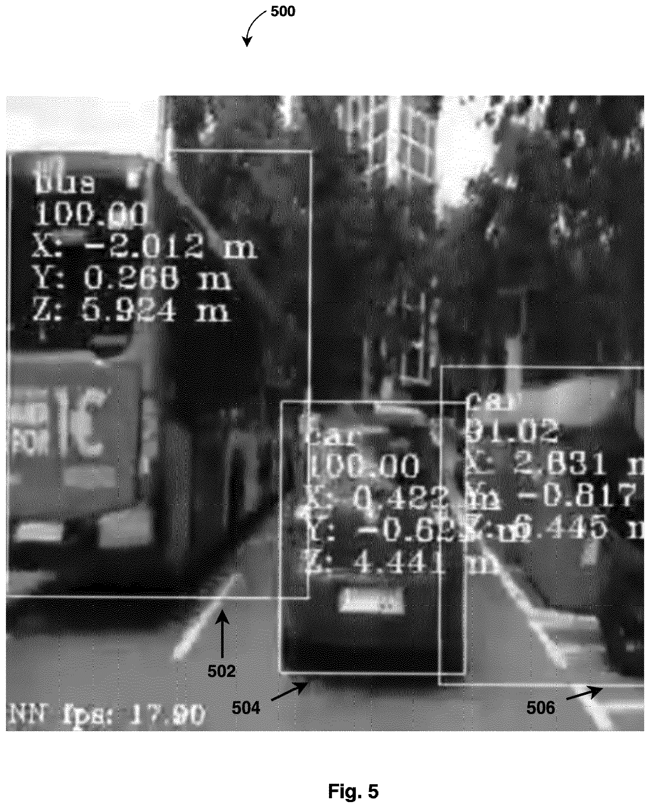

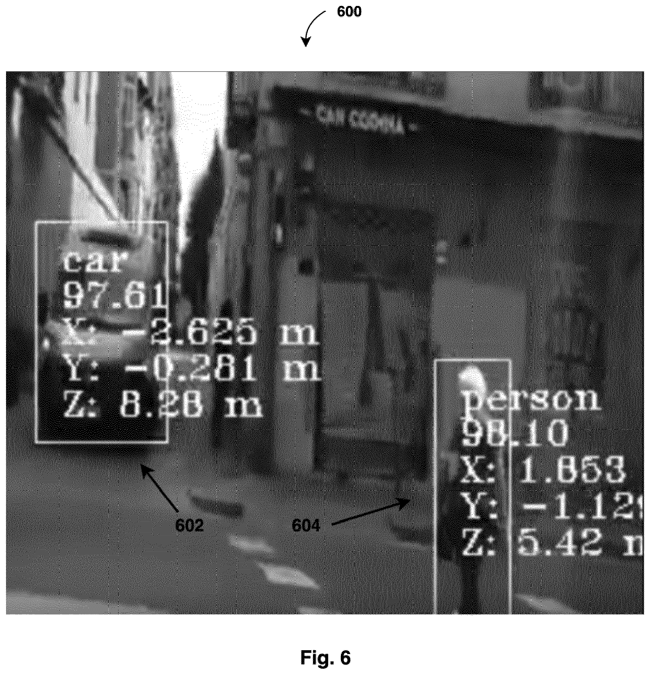

Figure 3 shows an embodiment of a vehicle collision detection system comprising a processing unit 302 that includes an obstacle detection unit 304, a collision detection unit 306, and a collision avoidance unit 306. Collision detection unit 306 communicates with driving profile database 308. Database 308 contains one or more kinds of information specific to the driver, such as physical characteristics, relative experience level, and reaction time. Collision avoidance unit 310 communicates with vehicle engine actuation unit 312, as well as with speaker 314 and indicator 316. Obstacle detection unit 304 further comprises a vision processing module 318 in communication with stereo camera 320, lightweight deep learning object detection model 322, and object location module 326 in communication with radar sensor 328. As shown by bounding boxes in Figure 2 above and Figures 5 and 6 below, lightweight deep learning object detection module 322 identifies environmental objects based on visual image data. The object location module 326, working together with radar sensor 328, supplies object distance to the bounding box classification generated by the lightweight deep learning object detection module 322.

Collision avoidance determines whether to activate speaker 314 and indicator 316 in several ways. In an embodiment, the determination depends on a threat index that is at least a function of the object's distance. For example, the threat index can include distance thresholds such that objects within a first, nearer distance trigger a loud audible warning while objects at a second, farther distance trigger a visual indication such as an illuminated arrow in the direction of the obstacle. The index can be further enhanced by including object trajectory into the calculation of the index. In this embodiment, warnings can be prioritized for nearby objects with a trajectory in the path of the lightweight vehicle. On the other hand, nearby stationary objects outside the pay of the lightweight vehicle, such as trees and traffic lights generate lower priority warnings or are ignored altogether.

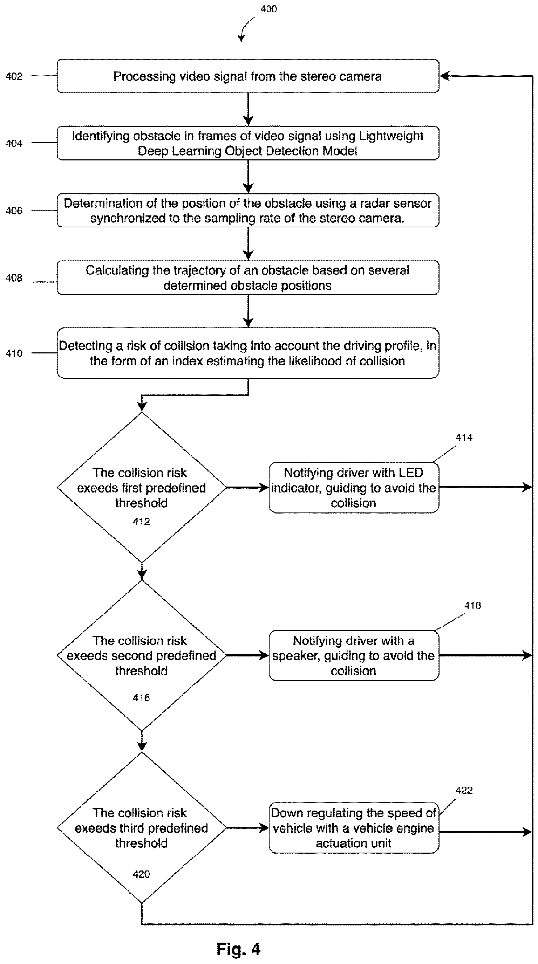

Figure 4 shows a block diagram of steps 400 implementing vehicle collision detection and driver notification system 300. At step 402, a video signal from camera 320 is processed by vision processing module 318. At step 404, an obstacle is identified in captured video frames using a lightweight deep learning detection model. At step 406, the position of the identified obstacle is calculated by the object location module using radar sensor 328 synchronized to the sampling rate of the stereo camera. Then at step 408 the trajectory of the obstacle is calculated based on several determined obstacle positions. Collision detection unit 306 then detects a risk of collision at step 410 in the form of an index, taking into account the driver riding profile stored in database 308.

At step 412, a first decision is made whether the index generated at step 410 exceeds a first predefined threshold. If so, the driver is notified with a first indication at step 414. In an embodiment, the first indication is made visually by way of an LED indicator.

At step 416, a second decision is made whether the index generated at step 410 exceeds a second predefined threshold. If so, the driver is notified with a second indication at step 418. In an embodiment, the second indication is made audibly by way of a speaker that gives one or more directions to the driver to help avoid the obstacle.

At step 420, a third decision is made whether the index generated at step 410 exceeds a third predetermined threshold. If so, a third indication is communicated to the vehicle engine actuation unit. In an embodiment, the third indication instructs the vehicle engine actuation unit to adjust the engine speed of the lightweight vehicle downward, thereby reducing the lightweight vehicle's velocity.

Figure 5 shows the real-time results of object detection 500 using the system of Figure 3 and the method of Figure 4. Object detection images are shown by bounding boxes 502, 504, and 506. Bounding box 502 shows a "bus" recognized with 100% confidence by the lightweight deep learning object detection model. Using radar data, the position of the bus in bounding box 502 is given in the x, y, and z directions. In relation to the obstacle detection unit, data associated with bounding box 502 shows that the bus is 2.012 meters to the left, .268 meters above, and 5.924 meters away. Other environmental objects are classified similarly. Bounding box 504 shows a "car" recognized with 100% confidence. The car in bounding box 504 is .422 meters to the right of the obstacle detection unit, .623 meters below, and 4.441 meters away. Bounding box 506 shows a "car" recognized with 91.02% confidence. The car in bounding box 506 is 2.831 meters to the right of the obstacle detection unit, .817 meters above, and 6.445 meters away.

Figure 6 shows alternative real-time object detection images 600 including bounding boxes 602 and 604. Bounding box 602 shows a "car" recognized with 97.61% confidence. Bounding box 604 shows a "person" recognized with 98.10% confidence. The car in bounding box 602 is 2.625 meters to the left of the obstacle detection unit, .281 meters below, and 8.28 meters away. The person in bounding box 604 is 1.853 meters to the right of the obstacle detection unit, 1.12 meters below, and 5.42 meters away. As shown in Figures 5, 6, and 7, the vehicle collision avoidance system can identify environmental objects in real time by category as well as by distance.

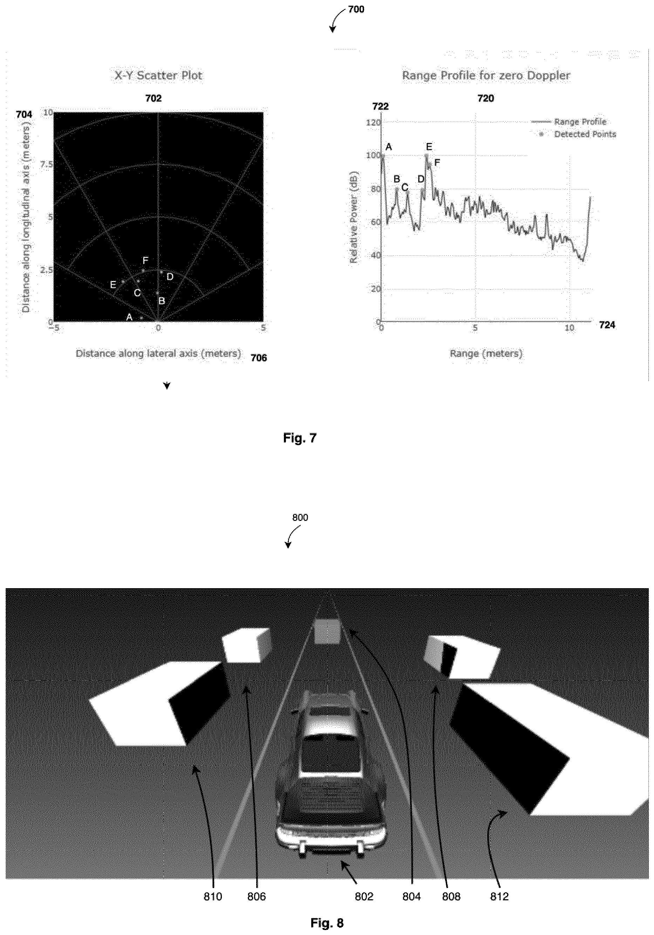

Figure 7 shows visualizations of data collected by radar sensor 328. X-Y Scatter Plot 702 shows six detected objects A-F in the X-Y domain represented as white dots. Y-axis 704 shows the distance in meters along a longitudinal axis from the obstacle detection unit. X-axis 706 shows the distance in meters along a lateral axis with respect to the obstacle detection unit. Range Profile 720 shows the range profile at the 0th Doppler in log values for the six objects represented by dots A, B, C, D, E, and F. In an embodiment, the radar sensor detects the distance of potential objects but conserves system resources by only processing the distance of those objects identified by the lightweight deep learning object detection model.

Figure 8 shows a screenshot of a dashboard visible to the driver of a lightweight vehicle equipped with an embodiment of the invention. The dashboard presents detected objects 802, 804, 806, 808, 810, and 812. Object 802, which is in the path of the lightweight vehicle, has been classified as a car. Object 804 has not yet been classified, but it is in the path of the lightweight vehicle. Other objects are not currently in the path of the lightweight vehicle. Unclassified objects 806 and 808 are far enough away that the risk of collision is relatively uncertain. For such objects, further classification and trajectory determinations will allow for risk assessment. For example, an object classified as a tree that is not in the path of the lightweight vehicle represents a lesser threat than an object classified as a pedestrian or motorbike.

For some objects, such as unclassified objects 810 and 812, the risk of collision may be determined to be relatively low by a combination of analytics. For example, objects outside the current path of the lightweight vehicle but relatively close may be excluded as risks if they are classified as immovable, such as traffic signs or trees. On the other hand, such close objects may be relatively large risks if they are classified as cars or motorbikes in motion. Trajectory calculations allow non-moving parked vehicles to be distinguished from moving vehicles and thereby further refine the accuracy of the threat index.

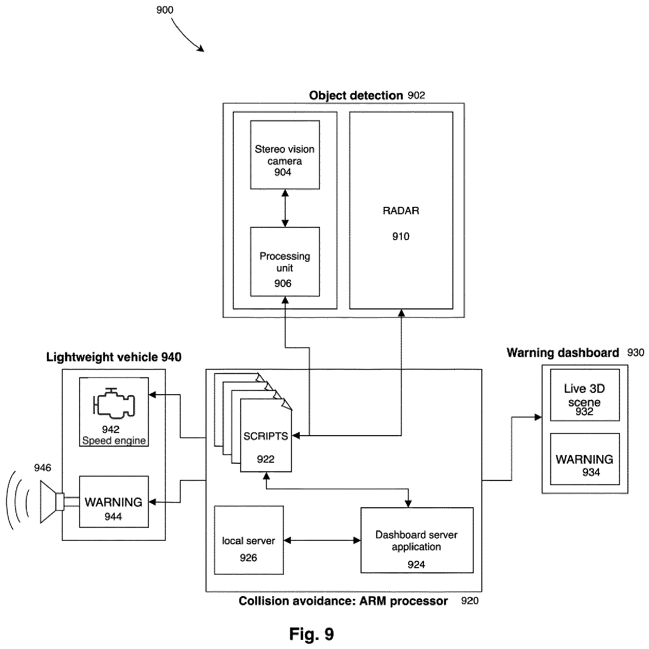

Figure 9 shows an overview 900 of the vehicle collision detection and driver notification system and the interconnection of its parts in an embodiment directed to a motorized scooter. The object detection unit 902 comprises stereo vision camera 904, processing unit 906, and radar 910. The collision avoidance unit 920 comprises an ARM processor that comprises scripts 922, a dashboard server application 924, and a local server 926. The warning unit 930 comprises a Live 3D scene dashboard 932 and a visual warning indicator 934. The lightweight vehicle 940, here a scooter, includes engine 942 and audible warning 944 coupled with a sound-generating device 946.

## Claims

1. A collision avoidance device for a lightweight vehicle operated by a driver, comprising:
an object detection unit configured to detect obstacles following a trajectory relative to the unit;
a collision avoidance unit communicatively coupled to the object detection unit; and
a warning notification unit communicatively coupled to the collision avoidance unit and configured to convey an audible or visual warning to the driver;
wherein the object detection unit calculates the distance to an environmental obstacle and the collision avoidance unit determines an index estimating the likelihood of collision with that obstacle; and
wherein when the index meets a first predefined threshold, the warning notification unit notifies the driver.

2. The collision avoidance device for a lightweight vehicle as in claim 1, wherein the collision avoidance unit further determines the index by determining if the obstacle is following a trajectory that could lead to collision with the lightweight vehicle.

3. The collision avoidance device of claim 2, wherein the warning notification conveys a warning to the driver comprising an audible indication.

4. The collision avoidance device of claim 3, wherein the object detection unit includes a combination of a stereo imaging pickup device and a distance-measuring device comprising a radar sensor.

5. The collision avoidance device of claims 2, wherein the object detection unit is configured to operate with lightweight algorithms that require 8GB RAM or less and wherein radar hardware requires no more than a 5 volt 3 ampere power supply.

6. The collision avoidance device of claim 4, wherein the collision avoidance unit consists of low computational cost elements.

7. The collision avoidance device of claim 6, wherein the collision avoidance unit is responsible for the synchronization of the object detection unit data and uses a Kalman filter algorithm to track and identify the detected objects and wherein when the collision avoidance unit determines that the detected obstacle is following a dangerous trajectory with respect to the lightweight vehicle and the distance to the obstacle meets a predefined threshold, the warning notification unit notifies the driver.

8. The collision avoidance device of claim 6, wherein the collision avoidance unit incorporates at least one user specific metric in the trajectory estimate.

9. The collision avoidance device of claim 2 wherein the engine speed unit will downregulate as a function of the likelihood of collision index.
